# EUROPÄISCHE PATENTSCHRIFT

(11) **EP 2 359 314 B1**
(45) Veröffentlichungstag und Bekanntmachung des Hinweises auf die Patenterteilung: **06.11.2013**
(21) Anmeldenummer: 09752861.6
(22) Anmeldetag: 20.11.2009
(51) Int. Cl.: G01L 9/00, G01L 19/04, G01L 27/00, G01L 19/08

(54) **VERFAHREN ZUR HERSTELLUNG VON MESSAUFNEHMERN**
METHODS FOR THE PRODUCTION OF MEASURING TRANSDUCERS
PROCÉDÉS DE FABRICATION D'ENREGISTREURS DE MESURE

(30) Priorität: 17.12.2008 DE 102008054829
(43) Veröffentlichungstag der Anmeldung: 24.08.2011
(73) Patentinhaber: Endress+Hauser GmbH+Co. KG, 79689 Maulburg (DE)
(72) Erfinder: ALTENDORF, Matthias, 79539 Lörrach (DE); MAYR, Andreas, 79539 Lörrach (DE); PHILIPPS, Michael, 79539 Lörrach (DE)
(74) Vertreter: Andres, Angelika Maria
(86) Internationale Anmeldenummer: PCT/EP2009/065528
(87) Internationale Veröffentlichungsnummer: WO 2010/069707

(56) Entgegenhaltungen:
- DE-A1-102006 024 743
- US-A- 4 025 912
- US-A1- 2007 229 229
- US-A1- 2007 252 691

## Beschreibung

Die Erfindung betrifft ein Verfahren zur Herstellung von Messaufnehmern, insb. von Druck- oder Differenzdruckmessaufnehmern.

Messaufnehmer werden heute in einer Vielzahl von Anwendungen in der industriellen Messtechnik eingesetzt. Druckmessaufnehmer werden von der Anmelderin unter der Produktbezeichnung Cerabar und Differenzdruckmessaufnehmer unter der Produktbezeichnung Deltabar hergestellt und vertrieben.

Druck- bzw. Differenzdruckmessaufnehmer weisen einen Druck- bzw. Differenzdrucksensor zur Erfassung des zu messenden Drucks bzw. des zu messenden Differenzdrucks und zur Umwandlung desselben in eine elektrische Größe auf. Die Sensoren sind üblicher Weise mit einer Sensorelektronik ausgestattet, die die elektrische Größe in ein druckabhängiges elektrisches Messsignal umwandelt. Messaufnehmer werden üblicher Weise in Messgeräten eingesetzt, die eine Messgerätelektronik aufweisen, der das Messsignal über einen elektrischen Anschluss zwischen Messaufnehmer und Messgerätelektronik zugeführt wird. Es sind aber auch Druckmessgeräte bekannt, bei denen die Energieversorgung des Drucksensors und die Übertragung des Messsignals über eine drahtlose Verbindung zwischen Messgerätelektronik und Drucksensorelektronik erfolgt. Ein Beispiel einer induktiven Kopplung zwischen Drucksensor und Messgerätelektronik ist in der DE 40 33 053 A1 beschrieben. Die Messgerätelektronik bestimmt anhand des Messsignals den zu messenden Druck und stellt das Messergebnis einer Anzeige, einer weiteren Verwendung und/oder einer weiteren Verarbeitung zur Verfügung.

Moderne elektrische Messgeräte und damit auch deren Messaufnehmer müssen immer höheren Anforderungen an Qualität, Sicherheit und Messgenauigkeit genügen.

Die meisten Hersteller betreiben hierzu ein aktives und umfangreiches Qualitätsmanagement. Im Rahmen der Qualitätssicherung werden hierzu insb. strenge Auflagen an die Herstellungsprozesse gestellt, die insb. regelmäßige Kontrollen und eine genaue Dokumentierung der einzelnen Herstellungsschritte erfordern. In diesem Zusammenhang spielt die Identifizierbarkeit der Messaufnehmer und/oder deren Sensoren eine wichtige Rolle. Die Identifizierung von Messaufnehmern und/oder Sensoren erfolgt üblicher Weise anhand von darauf aufgebrachten Labeln, über die die Messaufnehmer bzw. deren Sensoren einer Seriennummer zugeordnet werden. Die Dokumentierung des Herstellungsprozesses wird unter der Seriennummer abgespeichert, anhand derer dann beispielsweise fertigungstechnische Daten, wie z.B. das Produktionsdatum, Chargennummern etc., ermittelt werden können.

Label oder andere Formen von Kennzeichnungen oder Beschriftungen erfordern jedoch Platz. Ein Label weist typischer Weise eine Größe von 10 mm x 10 mm auf. Im Zuge der Miniaturisierung von elektronischen Geräten ist dieser Platz jedoch nicht immer vorhanden. Außerdem können Label durch den Einbau der mit dem Label versehenen Komponente verdeckt und damit unlesbar werden.

Um den hohen Anforderungen an die Sicherheit und die Messgenauigkeit Rechnung zu tragen werden die Messaufnehmer und/oder deren Sensoren immer umfangreicheren Kalibrationsund/oder Testverfahren unterzogen. Diese Verfahren sind mittlerweile fester Bestandteil des Herstellungsverfahrens und werden üblicher Weise in einer entsprechenden Fertigungslinie ausgeführt, in der der Messaufnehmer entsprechend ausgebildete Fertigungsstationen durchläuft.

Sie bedeuten jedoch einen sehr hohen fertigungstechnischen Aufwand, da jeder Messaufnehmer für jedes dieser Verfahren, dem er unterzogen werden muss, in der entsprechenden Fertigungsstation montiert und vor allem jeweils erneut elektrisch angeschlossen werden muss. Der elektrische Anschluss ist erforderlich, um den Messaufnehmer, insb. dessen Sensoren, während dieser Verfahren mit Energie zu versorgen, und um deren Messsignale empfangen zu können.

In der Serienproduktion stellen diese Verfahren ein logistisches Problem dar, da sicher zu stellen ist, dass die Ergebnisse der einzelnen Kalibrations- und/oder Testverfahren auch wirklich dem Messaufnehmer zugeordnet werden, mit dem sie abgeleitet wurden.

Ein weiteres Problem stellen diejenigen Kalibrations- und/oder Testverfahren dar, bei denen messaufnehmer- und/oder sensor-spezifische Daten aufgenommen werden, die für die einwandfreie Funktion des Messaufnehmers und/oder für die Erzielung der gewünschten Messgenauigkeit im Messaufnehmer und/oder in einem mit dem Messaufnehmer ausgestatteten Messgerät zur Verfügung stehen müssen. Hierzu gehören insb. anhand von Kalibrationsverfahren abgeleitete Daten, wie z.B. Kenngrößen und/oder Kennlinien, die nachfolgend zur Aufbereitung des Messsignals, zur Ermittlung des Drucks- bzw. des Differenzdrucks und/oder zur Kompensation von Messfehlern benötigt werden.

Es werden beispielsweise sensor-spezifische Kennlinien aufgenommen, die das sensorspezifische Übertragungsverhalten des jeweiligen Sensors in Abhängigkeit von dem darauf einwirkenden Druck bzw. Differenzdruck wiedergeben. Zusätzlich wird in der Regel eine Temperaturabhängigkeit des Übertragungsverhaltens bestimmt, die nachfolgend zur Kompensation von temperatur-abhängigen Messfehlern der Druck- bzw. Differenzdrucksensoren verwendet wird.

Es gibt Druck- bzw. Differenzmessaufnehmer, die mit einer Druck übertragenden Flüssigkeit gefüllte Druckmittler aufweisen. Diese dienen dazu, einen von außen beispielsweise an einer Trennmembran des jeweiligen Druckmittlers anliegenden Druck auf den Sensor zu übertragen. Bei der Verwendung von Druckmittlern ist dementsprechend zusätzlich das Übertragungsverhalten und die Temperaturabhängigkeit des Übertragungsverhaltens der Druckmittler zu berücksichtigen. Die Temperaturabhängigkeit kann beispielsweise anhand von im Druckmittler angeordneten Temperatursensoren abgeleitet werden, wie sie beispielsweise in der EP 0 764 839 beschrieben sind. Im Druckmittler angeordnete Temperatursensoren müssen für diese Kalibrations- und/oder Testverfahren elektrisch angeschlossen werden, um die Temperatursensoren mit Energie zu versorgen und deren Messsignale aufzunehmen.

Die im Rahmen der Test- und/oder Kalibrationsverfahren ermittelten Daten müssen jeweils in korrekter Zuordnung zu dem jeweiligen Messaufnehmer und/oder Sensor abgeleitet, in der Fertigungsstation zwischengespeichert und an deren endgültigen Bestimmungsort weitergeleitet werden. Dabei kann der Bestimmungsort auch außerhalb des Messaufnehmers liegen. Dies ist z.B. dann der Fall, wenn diese Daten von der Messgerätelektronik des Messgeräts benötigt werden, in das der Messaufnehmer zu einem späteren Zeitpunkt eingesetzt wird.

In der DE 10 2006 024 743 A1 ist ein Messumformer beschrieben, der einen Speicher aufweist, in dem Kalibrierdaten und Applikations- bzw. Konfigurationsdaten abgelegt sind, die bei defektem Messumformer über eine autarke RFID Schnittstelle über ein externes Zusatzgerät ausgelesen und in den entsprechenden Speicher eines Austauschgeräts übertragen werden können.

Es ist eine Aufgabe der Erfindung ein Herstellungsverfahren für Messaufnehmer anzugeben, mit dem mit geringem logistischen und fertigungstechnischem Aufwand ein hohes Maß an Qualität, Sicherheit und Messgenauigkeit erzielbar ist.

Hierzu besteht die Erfindung in einem Verfahren zur Herstellung von Messaufnehmern, insb. von Druck- oder Differenzdruckmessaufnehmern, mit
- einem über eine zugeordnete RFID Schnittstelle lesbaren und beschreibbaren Speicher,
- mindestens einem Sensor zur Erfassung einer physikalischen Messgröße und zur Umwandlung derselben in eine elektrische Größe,
   -- der mit einer Sensorelektronik ausgestattet ist,
      --- die dazu dient die elektrische Größe in ein von der Messgröße abhängiges elektrisches Messsignal umzuwandeln, und
      --- die mit einem RFID Transponder ausgestattet ist,
         ---- über den die Energieversorgung des Sensors erfolgt, und
         ---- über den die Messsignale drahtlos auslesbar sind, bei dem
- die Messaufnehmer und/oder deren Sensoren mindestens einem Kalibrations- und/oder Testverfahren unterzogen werden, bei dem
   -- die Sensoren ausschließlich über deren RFID Transponder mit Energie versorgt werden, und deren Messsignale über deren RFID Transponder ausgelesen werden, und
   -- anhand der Kalibrations- und/oder Testverfahren messaufnehmer-spezifische und/oder sensor-spezifische Daten abgeleitet und über die RIFD Schnittstelle in dem Speicher abgelegt werden.

Gemäß einer Weiterbildung des erfindungsgemäßen Verfahrens wird ein Kalibrationsverfahren ausgeführt, bei dem ein Übertragungsverhalten der Sensoren und/oder der Messaufnehmer in Abhängigkeit von der physikalischen Messgröße und/oder eine Temperaturabhängigkeit dieser Übertragungsverhalten ermittelt wird, dieses Übertragungsverhalten wiedergebende Daten, insb. Kenngrößen oder Kennlinien abgeleitet werden, und in dem Speicher abgelegt werden.

Gemäß einer weiteren Weiterbildung umfasst die Erfindung ein erfindungsgemäßes Verfahren, bei dem
- der Messaufnehmer ein Druck- oder Differenzdruckmessaufnehmer ist, der mindestens einen Druckmittler aufweist,
- mindestens ein Sensor ein in dem Druckmittler angeordneter Temperatursensor ist, und
- ein Kalibrationsverfahren ausgeführt wird, bei dem
   -- ein Übertragungsverhalten der Druckmittler in Abhängigkeit von einem darauf einwirkenden Druck und der mit den Temperatursensoren erfassten Temperatur ermittelt wird,
   -- Daten, insb. Kenngrößen oder Kennlinien, abgeleitet werden, die dieses Übertragungsverhalten wiedergeben, und
   -- diese Daten über die dem Speicher zugeordnete RFID Schnittstelle in dem Speicher abgelegt werden.

Gemäß einer weiteren Weiterbildung umfasst die Erfindung ein erfindungsgemäßes Verfahren, bei dem
- eine Transponderkennung jedes Sensors ausgelesen und einer Seriennummer zugeordnet wird, und
- der Messaufnehmer und/oder der jeweilige Sensor während des gesamten daran anschließenden Herstellungsverfahrens anhand der Transponderkennung und/oder der zugeordneten hierzu über die RIFD Schnittstelle in dem Speicher abgelegten Seriennummer berührungslos identifiziert werden

Gemäß einer weiteren Weiterbildung werden in dem Speicher bei der Herstellung erfasste Fertigungsdaten, insb. ein Herstellungsdatum, eine Chargennummer, für die Qualität des Herstellungsprozesses relevante Daten und/oder eine Seriennummer über die dem Speicher zugeordnete RIFD Schnittstelle in dem Speicher abgelegt.

Gemäß einer weiteren Weiterbildung umfasst die Erfindung ein erfindungsgemäßes Verfahren, bei dem
- der Messaufnehmer in einer Fertigungslinie nacheinander mehrere Fertigungsstationen durchläuft in denen jeweils ein Teilherstellungsprozess ausgeführt wird,
- der Messaufnehmer in den Fertigungsstationen über die Transponderkennungen der Sensoren und/oder über in dem Speicher abgelegte Daten identifiziert wird, die in der jeweiligen Fertigungsstation über die dem Speicher zugeordnete RFID Schnittstelle ausgelesen werden, und/oder
- fertigungsrelevante Daten von einer Fertigungsstation zu einer nachfolgenden Fertigungsstation übermittelt werden, indem sie in der einen Fertigungsstation über eine Lese- und Schreibvorrichtung dieser Fertigungsstation und die dem Speicher zugeordnete RFID Schnittstelle in dem Speicher abgelegt und in der nachfolgenden Fertigungsstation über eine Lese- und Schreibvorrichtung dieser Fertigungsstation und die dem Speicher zugeordnete RFID Schnittstelle aus dem Speicher ausgelesen werden.

Die Erfindung und weitere Vorteile werden nun anhand der Figuren der Zeichnung, in denen zwei Ausführungsbeispiel dargestellt sind, näher erläutert; gleiche Elemente sind in den Figuren mit gleichen Bezugszeichen versehen.
- Fig. 1 zeigt: eine schematische Darstellung eines Druckmessgeräts mit einem Druckmessaufnehmer;
- Fig. 2 zeigt: die Sensorelektronik des Drucksensors von Fig. 1;
- Fig. 3 zeigt: eine Fertigungslinie; und
- Fig. 4 zeigt: eine schematische Darstellung eines Differenzdruckmessgeräts mit einem mit zwei Druckmittlern ausgestatteten Differenzdruckmessaufnehmer.

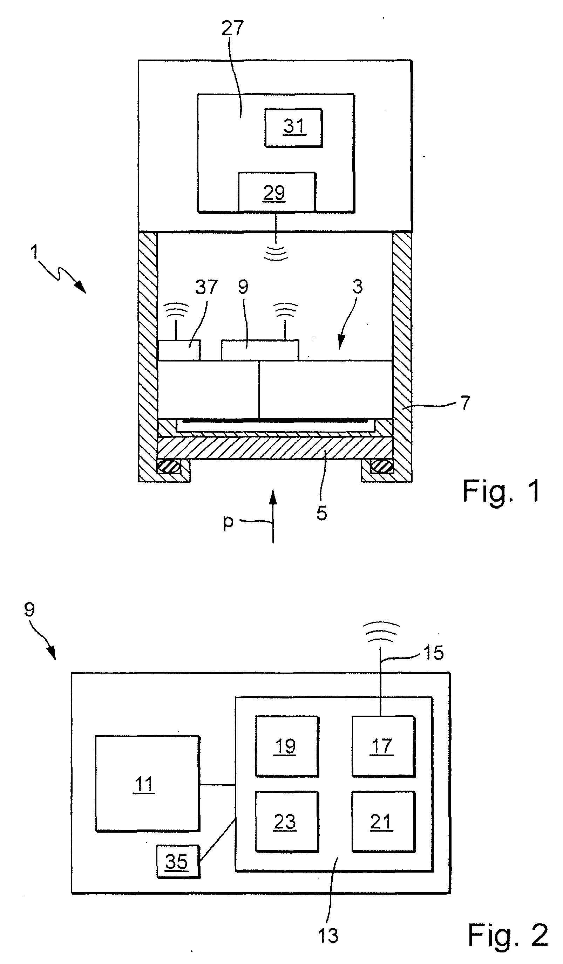

Fig. 1 zeigt eine schematische Darstellung eines Messgeräts mit einem erfindungsgemäß hergestellten Messaufnehmer 1. Bei dem dargestellten Ausführungsbeispiel handelt es sich um ein Druckmessgerät mit einem Druckmessaufnehmer.

Der Messaufnehmer 1 weist mindestens einen Sensor zur Erfassung einer physikalischen Messgröße und zur Umwandlung derselben in eine elektrische Größe auf. In dem dargestellten Ausführungsbeispiel ist dies ein kapazitiver Drucksensor 3, der eine Messmembran 5 aufweist, der von außen ein zu messender Druck p zugeführt wird. Dieser bewirkt eine druck-abhängige Auslenkung der Messmembran 5, die durch einen mit der Messmembran 5 verbundenen elektromechanischen Wandler in eine vom einwirkenden Druck p abhängige elektrische Größe, hier eine Kapazität, umgewandelt wird. Der Sensor 3 ist im dargestellten Endzustand in einem Messaufnehmergehäuse 7 eingebaut.

Der Sensor 3 ist mit einer Sensorelektronik 9 ausgestattet, die dazu dient die elektrische Größe in ein von der Messgröße abhängiges elektrisches Messsignal umzuwandeln. Hierzu umfasst die in Fig. 2 im Detail dargestellte Sensorelektronik 9 eine Signalaufbereitungsschaltung 11, die an den elektromechanischen Wandler angeschlossen ist. Des Weiteren ist sie mit einem Radio Frequency Identification Device Transponder (RFID Transponder) 13 ausgestattet, über den die Energieversorgung des Sensors 3 erfolgt, und über den die von der Signalaufbereitungsschaltung 11 generierten Messsignale drahtlos auslesbar sind.

RFID-Transponder 13 weisen hierzu üblicher Weise eine Antenne 15, einen analogen Schaltkreis 17 zum Senden und Empfangen (Transceiver), sowie einen mit einem Mikrochip ausgestatteten digitalen Schaltkreis 19 und einen Speicher 21 auf, in dem eine eindeutige Transponderkennung abgelegt ist. Die Sensorelektronik 9 ist hier vorzugsweise als Application-Specific Integrated Circuit (ASIC) mit integriertem RFID Transponder 13 ausgebildet.

Der Messaufnehmer 1 weist erfindungsgemäß einen Speicher 23 auf, der über eine diesem zugeordnete RFID Schnittstelle lesbar und beschreibbar ist.

Dieser Speicher 23 und die diesem zugeordnete RFID Schnittstelle sind vorzugsweise Bestandteil der Sensorelektronik 9, insb. des RFID-Transponders 13. Hierzu wird bevorzugt ein RFID-Transponder 13 eingesetzt, in dem der Speicher 23 bereits integriert ist. In diesem Speicher 23 können während der gesamten Lebensdauer des RFID-Transponders 13 Informationen abgelegt und jederzeit berührungslos über ein entsprechendes Lesegerät abgefragt und ausgelesen werden. Die dem Speicher 23 zugeordneten RFID Schnittstelle umfasst in dem dargestellten Ausführungsbeispiel den Transceiver 17 und die Antenne 15 des RFID Transponders 13.

Erfindungsgemäß wird der Messaufnehmer 1 mindestens einem Kalibrations- und/oder Testverfahren unterzogen, bei dem der Sensor 3 ausschließlich über den RFID Transponder 13 der Sensorelektronik 9 mit Energie versorgt wird, und die während des jeweiligen Verfahrens generierten Messsignale des Sensors 3 ausschließlich über dessen RFID Transponder 13 ausgelesen werden. Anhand dieser Kalibrations- und/oder Testverfahren werden messaufnehmer-spezifische und/oder sensor-spezifische Daten, abgeleitet und über die RIFD Schnittstelle in dem Speicher 23 abgelegt.

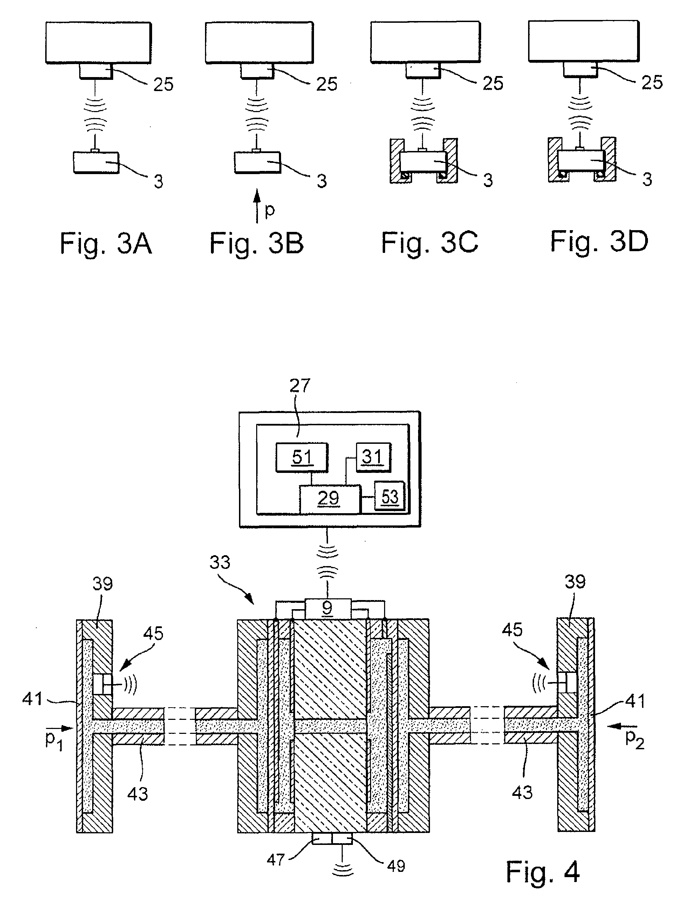

Bei der Serienproduktion von Messaufnehmern werden regelmäßig Fertigungslinien eingesetzt, die mehrere Fertigungsstationen aufweisen, die von jedem Messaufnehmer 1 nacheinander durchlaufen werden. In jeder Fertigungsstation wird jeweils ein Teilherstellungsprozess ausgeführt. Dabei werden soweit dies möglich ist so genannte Batch-Prozesse eingesetzt, in denen mehrere Messaufnehmer 1 in der jeweiligen Fertigungsstation zeitgleich dem gleichen Teilherstellungsprozess unterzogen werden. Fig. 3 zeigt eine schematisch Darstellung einer solchen aus den Fertigungsstationen A bis D bestehenden Fertigungslinie. Jede der Fertigungsstationen A bis D verfügt über ein Lese- und Schreibvorrichtung 25, über die die RFID Transponder 13 der Sensoren 3, und darüber die Sensoren 3 insgesamt mit Energie versorgt werden können, über die die Transponderkennnungen und die in den Speichern 23 abgelegten Daten ausgelesen werden können, und über die Daten in den Speichern 23 abgelegt werden können. Des Weiteren werden über diese Lese- und Schreibvorrichtungen 25 in den Fertigungsstationen, in denen während des dort auszuführenden Teilherstellungsprozesses die Messsignale der Sensoren 3 benötigt werden, diese Messsignale ausgelesen. Ein elektrischer Anschluss der Messaufnehmer 1, insb. von deren Sensoren 3, ist damit während des gesamten Herstellungsprozesses nicht mehr erforderlich. Dies spart Zeit und erhöht die Sicherheit, da Probleme, die beispielsweise durch alternde Kontaktanschlüsse der Fertigungsstationen, fehlerhafte Kontakte oder Bedienungsfehler auftreten können, ausgeschlossen werden.

Vorzugsweise werden zu einem möglichst frühen Zeitpunkt, insb. unmittelbar nach dem Aufbringen der Sensorelektroniken 9 auf die Sensoren 3, die Transponderkennungen der Sensoren 3 ausgelesen und einer Seriennummer zugeordnet. In dem dargestellten Ausführungsbeispiel geschieht dies in der ersten Fertigungsstation A. Das Auslesen der Transponderkennungen erfolgt vollautomatisch über die Lese-Schreibvorrichtung 25. Es stellt zugleich ein erstes Testverfahren dar, bei dem diejenigen Sensoren 3, deren Transponderkennung nicht ausgelesen werden können, als fehlerhaft erkannt und entsprechend ausgesondert werden. Die zugeordneten Seriennummern werden vorzugsweise unmittelbar mittels der Lese- Schreibvorrichtung 25 über die RFID Schnittstellen der Sensoren 3 in den Speichern 23 abgelegt. Anschließend ist jeder Sensor 3, und damit auch der später den Sensor 3 enthaltende Messaufnehmer 1 während des gesamten daran anschließenden Herstellungsverfahrens und danach anhand der Transponderkennung und/oder der zugeordneten hierzu über die RIFD Schnittstelle in dem Speicher 23 abgelegten Seriennummer jederzeit berührungslos identifizierbar.

Das Ablegen der Seriennummer bietet den Vorteil, dass die Sensoren 3 und/oder die Messaufnehmer 1 nicht mit einem entsprechenden Label oder einer ähnlichen Kennzeichnung versehen werden müssen. Die Seriennummer ist nun jederzeit, auch nach dem Einbau des fertig gestellten Messaufnehmers 1 beim Endkunden, von außen berührungslos auslesbar. Letzteres gilt natürlich auch für weitere in dem Speicher 23 abgelegten Daten.

Als weiteres Testverfahren kann in der ersten Fertigungsstation A vorab über die Lese-Schreibvorrichtung 25 ein erstes Messsignal der Sensoren 3 aufgenommen werden, um die grundsätzliche Funktionsfähigkeit der Sensoren 3 bereits an dieser Stelle sicherzustellen.

Vorzugsweise werden die einzelnen Messaufnehmer 1 in den nachfolgenden Fertigungsstationen B, C, D über die Transponderkennungen von deren Sensor 3 und/oder über in deren Speicher 23 abgelegte Daten identifiziert, die in der jeweiligen Fertigungsstation B, C, D berührungslos ausgelesen werden. Dieser Schritt kann vollautomatisch beim Eintritt der Messaufnehmer 1 in die jeweilige Fertigungsstation A bis D ausgeführt werden, und kann insb. parallel für mehrere auf einem Träger mechanisch befestigte zeitgleich in die Fertigungsstation eingebrachte Messaufnehmer 1 ausgeführt werden. Dieses Vorgehen bietet ein hohes Maß an Sicherheit, da durch die eindeutige Identifizierung Vertauschungen oder Verwechselungen selbst dann noch zuverlässig ausgeschlossen werden können, wenn Träger z.B. vertauscht oder Messaufnehmer 1 auf den Trägern umgesetzt werden.

Zusätzlich bietet die eindeutige Identifizierung den Vorteil, dass für die Ablaufsteuerung innerhalb des gesamten Herstellungsprozesses verwendet werden kann.

Vorzugsweise werden die Speicher 23 zusätzlich genutzt, um fertigungsrelevante Daten von einer Fertigungsstation A, B oder C zu einer nachfolgenden Fertigungsstation B, C oder D zu übermitteln. Hierzu werden diese Daten in der jeweiligen Fertigungsstation A, B oder C über die jeweilige Lese- Schreibvorrichtung 25 in den Speichern 23 abgelegt und in der nachfolgenden Fertigungsstation B, C oder D über deren Lese- Schreibgerät 25 aus den Speichern 23 ausgelesen. Danach können die transferierten Daten, die später nicht mehr benötigt werden, natürlich wieder aus dem Speicher 23 gelöscht werden. Durch diese Form des Datentransfers zwischen den einzelnen Fertigungsstationen A, B, C, D kann ganz oder zumindest teilweise auf die ansonsten erforderliche zentrale Datenhaltung und die entsprechenden Datentransfervorrichtungen verzichtet werden.

Des Weiteren kann durch dieses Verfahren im Rahmen der Qualitätssicherung auf einfache Weise überprüft und sichergestellt werden, dass ein Messaufnehmer 1 alle Fertigungsstationen A - D in der richtigen Reihenfolge erfolgreich durchlaufen hat. Dies geschieht beispielsweise indem jede Fertigungsstation A, B, C, D zum Abschluss des zugehörigen Teilherstellungsprozesses die Beendigung des Teilherstellungsprozesses, sowie gegebenenfalls eine zugehörige Bewertung, durch einen entsprechenden Eintrag in dem Speicher 23 dokumentiert. Die nachfolgenden Fertigungsstationen B, C, D prüfen dann anhand dieser Daten jeweils, ob der Messaufnehmer 1 alle vorherigen Fertigungsstationen A, B, C erfolgreich durchlaufen hat. Anhand der entsprechenden Bewertung kann beispielsweise zusätzlich sichergestellt werden, dass ein einmal als Ausschuss deklarierter Messaufnehmer 1 nicht versehentlich wieder Eingang in den Herstellungsprozess findet.

In der zweiten Fertigungsstation B werden die Sensoren 3 z.B. einem Kalibrationsverfahren unterzogen, in dem hier ein Übertragungsverhalten der Sensoren 3 in Abhängigkeit von einem darauf einwirkenden Druck p bestimmt wird. Hieraus werden für jeden Sensor 3 Kalibrationsdaten abgeleitet, die z.B. als Kenngrößen und/oder Kennlinien in dessen Speicher 23 abgelegt werden. Auch hier ist kein elektrischer Anschluss erforderlich. Die Sensoren 3 müssen lediglich mechanisch befestigt, an für das Kalibrationsverfahren geeignete Druckzufuhrleitungen angeschlossen und den durch die Wahl des Kalibrationsverfahrens vorgegebenen Umgebungstemperaturen ausgesetzt werden. Über die eindeutige vollautomatische berührungslose Identifizierung der Sensoren 3 wird dabei automatisch sichergestellt, dass die Daten in korrekter Zuordnung in den Speichern 23 der jeweiligen Sensoren 3 abgelegt werden.

Vorzugsweise sind die Messaufnehmer 1 derart ausgebildet, dass die Sensorelektronik 9 Zugriff auf die in dem Speicher 23 abgelegte Daten hat. Damit stehen der Sensorelektronik 9 die während der Kalibrations- und/oder Testverfahren abgeleiteten und in dem Speicher 23 abgelegten Daten unmittelbar zur Verfügung. Die Sensorelektronik 9 verwendet mindestens eine dieser Daten bei nachfolgenden Umwandlungen der zu messenden Drücke p in das elektrische Messsignal. Dies geschieht beispielsweise, indem die Sensorelektronik 9, insb. deren Signalaufbereitungsschaltung 11, anhand dieser Daten eine Linearisierung des Messsignals in Abhängigkeit vom zu messenden Druck p vornimmt.

In der Fertigungsstation C wird z.B. die Endmontage ausgeführt. In dem dargestellten Ausführungsbeispiel werden die Sensoren 3 hier in deren Messaufnehmergehäuse 7 eingesetzt.

Zum Abschluss wird der Messaufnehmer 1, wie hier durch die Fertigungsstation D angedeutet, weiteren Testverfahren unterzogen, in denen beispielsweise anhand von gezielten Überprüfungen, Tests, Messungen usw. die Funktionsfähigkeit, die Messgenauigkeit, die Gehäusedichtigkeit etc. überprüft werden.

Vorzugsweise werden in dem Speicher 23 zusätzlich bei der Herstellung erfasste Fertigungsdaten, insb. ein Herstellungsdatum, eine Chargennummer und/oder für die Qualität des Herstellungsprozesses relevante Daten abgelegt, die dann über die RFID Schnittstelle jederzeit berührungslos auslesbar sind. Beispiele hierfür sind die Typennummern der Messaufnehmergehäuse 7, die in der Fertigungsstation C in dem Speicher 23 abgelegt wird, sowie Testergebnisse, wie z.B. das Ergebnis der Gehäusedichtigkeitsprüfung, das in der Fertigungsstation D in dem Speicher 23 abgelegt wird.

Der erfindungsgemäß hergestellte Messaufnehmer wird vorzugsweise, wie in Fig. 1 dargestellt, in einem Messgerät eingesetzt, dass mit einer Messgerätelektronik 27 ausgestattet ist, die eine RFID Schnittstelle 29 aufweist. Die RFID Schnittstelle 29 bildet vorzugsweise die einzige elektrische Verbindung zum Messaufnehmer 1. Über sie wird der Sensor 3 von der Messgerätelektronik 27 mit Energie versorgt, über sie empfängt die Messgerätelektronik 27 die Messsignale des Sensor 3, und über sie hat die Messgerätelektronik 27 Zugriff auf die in dem Speicher 23 abgelegten Daten. Ein elektrischer Anschluss zwischen Messgerätelektronik 27 und Sensorelektronik 9 ist nicht erforderlich. Da sowohl die Energieversorgung, als auch die Übertragung der Daten und der Messsignale drahtlos erfolgt, können Messgerätelektronik 27 und Messaufnehmer 1 auch als räumlich voneinander getrennte Module eingesetzt werden, die auch mechanisch nicht zwingend miteinander verbunden sein müssen.

Hier bietet die Erfindung den Vorteil, dass alle Daten, die für das Zusammenspiel von Messaufnehmer 1 und Messgerätelektronik 27 benötigt werden, werkseitig im Rahmen des Herstellungsverfahrens in dem Speicher 23 des Messaufnehmers 1 abgelegt werden können. Die Messgerätelektronik 27 identifiziert den Messaufnehmer 1 anhand der Daten und kann unmittelbar in Betrieb genommen werden. Dabei stehen alle benötigten Daten über die RFID Schnittstelle 29 zur Verfügung. Ein Datentransfer über externe Medien ist nicht erforderlich. Hierdurch ergibt sich eine Modularität, die es ermöglicht nachträglich, insb. auch beim Endkunden, defekte Messgerätelektroniken 27 oder Messaufnehmer 1 auszutauschen. Zusätzlich bietet das erfindungsgemäße Messgerät den Vorteil, dass z.B. im Rahmen einer Erstinbetriebnahme vorgegebene anwendungs-spezifische Daten, sowohl in einem Speicher 31 der Messgerätelektronik 27, als auch über die RFID-Schnittstelle 29 in dem Speicher 23 des Messaufnehmers 1 abgelegt werden können. Diese Daten müssen dann bei einem Austausch der Messgerätelektronik 27 oder des Messaufnehmers 1 nicht erneut vorgegeben werden.

Die Erfindung ist natürlich in völlig analoger Form auch für Differenzdruckmessaufnehmer und Differenzdruckmessgeräte einsetzbar.

Anstelle des Drucksensors 3 tritt in dem Fall ein Differenzdrucksensor 33 mit einer entsprechend aufgebauten Sensorelektronik 9. Dies ist in Fig. 4 dargestellt.

Die Erfindung ist in analoger Form natürlich auch auf andere oder weitere Sensoren der Messaufnehmer anwendbar bzw. erweiterbar. Hierzu zählen neben den bereits beschriebenen Sensoren 3 zur Erfassung der primären Messgröße, hier des Drucks bzw. des Differenzdrucks, auch Sensoren zur Erfassung von sekundären Messgrößen, wie z.B. der Temperatur. Hierzu eignet sich z.B. ein in der Sensorelektronik 9 des Druck- bzw. Differenzdrucksensors 3, 33 integrierter Temperaturfühler 35, der über den RFID Transponder 13 mit Energie versorgt wird, und dessen Messsignale über den RFID Transponder 13 auslesbar sind. Alternativ kann im Messaufnehmer, vorzugsweise auf dem Druck- bzw. Differenzdrucksensor 3, 33 ein eigenständiger Temperatursensor 37 vorgesehen werden, der über eine analog zu der Sensorelektronik 9 aufgebaute Sensorelektronik verfügt, über deren RFID Transponder die Energieversorgung des Temperatursensors 37 erfolgt und dessen Messsignale ausgelesen werden. In diesem Fall können mit dem erfindungsgemäßen Verfahren auch Kalibrationsverfahren ausgeführt werden, bei denen neben der Druckabhängigkeit auch die Temperaturabhängigkeit des Übertragungsverhaltens des Druck- bzw. Differenzdrucksensors 3, 33 aufgenommen wird, und daraus Daten abgeleitet werden, die dieses Übertragungsverhalten wiedergeben. Diese Daten werden dann ebenfalls, z.B. in Form von Kenngrößen und/oder Kennlinien, in dem Speicher 23 abgelegt.

Ein weiteres Beispiel sind Druck- bzw. Differenzdruckmessaufnehmer, die - wie in Fig. 4 dargestellt- mit mindestens einem Druckmittler 39 ausgestattet sind, der dazu dient einen auf dessen äußere Trennmembran 41 einwirkenden Druck p1 bzw. p2 über eine mit einem Druck übertragenden Medium gefüllte Kapillarleitung 43 auf die zugehörige Messmembran des Differenzdrucksensors 33 zu übertragen. In, an oder auf dem Druckmittler 39 ist jeweils ein Temperatursensor 45 zur Erfassung der Druckmittlertemperatur angeordnet. Die Temperatursensoren 45 sind vorzugsweise mit einer analog zu der Sensorelektronik 9 ausgebildeten Sensorelektronik ausgestattet. Diese weist einen RFID Transponder 13 auf, über den der Sensor 45 mit Energie versorgt wird, und über den die Messsignale berührungslos auslesbar sind. Dabei ist natürlich bei der Anordnung des RFID Transponders 13 darauf zu achten, dass dieser nicht von metallischen Komponenten des Druckmittlers 39 umgeben ist, die eine Abschirmung des RFID Transponders 13 bewirken. Die RFID Transponder 13 weisen eine in einem Speicher 21 abgelegte Transponderkennung auf, anhand derer die Temperatursensoren 45 jederzeit während des gesamten Herstellungsverfahrens und auch danach, berührungslos identifizierbar sind. Entsprechende drahtlos abfragbare passive Temperatursensoren sind auf dem Markt erhältlich.

Alternativ hierzu können Temperatursensoren 45 auch über eine durch die Kapillarleitung 43 geführte hier nicht dargestellte Anschlussleitung an die Sensorelektronik 9 des Differenzdrucksensors 33 angeschlossen sein. In dem Fall erfolgt die Energieversorgung des Temperatursensors 45 und die Übertragung der Temperaturmesssignale vom Temperatursensor 45 zur Sensorelektronik 9 des Differenzdrucksensors 33 leitungsgebunden. Dabei wird diese Energie jedoch nach wie vor von außen drahtlos über den RFID Transponder 13 der Sensorelektronik 9 des Differenzdrucksensors 33 zugeführt und die Messsignale des Temperatursensors 45 können von außen drahtlos über den RFID Transponder 13 der Sensorelektronik 9 des Differenzdrucksensors 33 abgefragt werden. Diese Variante ist z.B. dann sinnvoll, wenn die Temperatur in einem nach außen metallisch abgeschirmten Innenraum des Druckmittlers 39 erfasst werden soll. Ebenso ist sie in Verbindung mit Druckmittlern 39 sinnvoll, die sehr lange Kapillarleitungen 43 aufweisen. Die Länge der Kapillarleitungen 43 ist zwar im Hinblick auf das erfindungsgemäße Herstellungsverfahren unkritisch, da Kapillarleitungen 39 während des Herstellungsverfahrens aufgerollt oder derart gebogen werden können, so dass die heute mit der RFID Technologie erzielbare Reichweite ausreicht, sie stellt jedoch beim nachfolgenden Einsatz des Messaufnehmers in industriellen Anwendungen einen begrenzenden Faktor dar. Dort können die Temperatursensoren 45 natürlich nur innerhalb der heute erzielbaren Reichweite drahtlos mit Energie versorgt und deren Messsignale drahtlos ausgelesen werden.

Die drahtlos abfragbaren Temperatursensoren 45 sind natürlich auch in Verbindung mit Messaufnehmern erfindungsgemäß einsetzbar, die anstelle des beschriebenen passiven drahtlos auslesbaren Differenzdrucksensors 33 eine über eine elektrische Anschlussleitung anzuschließende klassische Differenzdruckmesszelle aufweisen. In dem Fall ist der Messaufnehmer mit einem über eine zugehörige RFID Schnittstelle lesbaren und beschreibbaren Speicher auszustatten, der dann die Funktionen des zuvor beschriebenen Speichers 23 des Differenzdrucksensors 33 übernimmt. Grundsätzlich kann hierzu an einem beliebigen Ort auf dem Messaufnehmer aufgebrachter Speicher 47 eingesetzt werden, der mit einer entsprechenden RIFD-Schnittstelle 49 ausgestattet ist. Alternativ kann - analog zu dem in Fig. 1 und 2 dargestellten Ausführungsbeispiel - ein Speicher eingesetzt werden, der Bestandteil der Sensorelektronik eines der beiden Temperatursensoren 45, insb. dessen RFID-Transponders, ist. Die zugehörige RFID Schnittstelle ist in dem Fall über den RFID Transponder dieses Temperatursensors 45 gegeben. Bei zwei Temperatursensoren 45 können natürlich beide Temperatursensoren 45 mit diesem Speicher ausgestattet sein.

Unabhängig davon, ob als über die zugehörige RFID Schnittstelle lesbarer und beschreibbarer Speicher des Messaufnehmers der in der Sensorelektronik 9 des Differenzdrucksensor 33 integrierte Speicher 23, der bzw. die in einem oder in beiden Temperatursensoren 45 integrierten Speicher, oder der separate Speicher 47 eingesetzt wird, werden diese Speicher natürlich völlig analog zu dem anhand des in Fig. 1 und 2 dargestellten Ausführungsbeispiels beschriebenen Speichers 23 zur Identifizierung, zur Speicherung von Fertigungsdaten, zum Datentransfer zwischen einzelnen Fertigungsstationen und zur Speicherung von in Kalibrations- und/oder Testverfahren abgeleiteten Daten genutzt.

Auch hier werden die Sensoren, d.h. die Temperatursensoren 45 und vorzugsweise auch die Differenzdrucksensoren 33 und/oder der Messaufnehmer erfindungsgemäß mindestens einem Kalibrations- und/oder Testverfahren unterzogen, bei dem zumindest die Temperatursensoren 45, vorzugsweise natürlich auch die Differenzdrucksensoren 33 ausschließlich über deren RFID Transponder 13 über deren Sensorelektronik 9 mit Energie versorgt werden, und die während des jeweiligen Verfahrens generierten Messsignale der Sensoren 33, 45 ausschließlich über deren RFID Transponder 13 ausgelesen werden. Dabei werden auch hier messaufnehmer-spezifische und/oder sensor-spezifische Daten abgeleitet, die über die RIFD Schnittstelle in dem Speicher 23 abgelegt werden.

Anhand der Temperatursensoren 45 wird vorzugsweise ein Kalibrationsverfahren ausgeführt, mit dem das Übertragungsverhalten der Druckmittler 39 in Abhängigkeit von einem darauf einwirkenden Druck p1 bzw. p2 und dessen Temperaturabhängigkeit aufgenommen wird und die daraus abgeleiteten Daten, insb. Kenngrößen und/oder Kennlinien, in dem Speicher 23 abgelegt werden. Dabei wird die Temperaturabhängigkeit anhand der Temperatursensoren 45 erfasst, deren Messsignale drahtlos ausgelesen werden. Sofern auch der Differenzdrucksensor 33 als passiver Sensor ausgebildet ist, werden natürlich auch dessen Messsignale wo immer sie benötigt werden berührungslos ausgelesen. In diesem Fall ist bei keinem der Test- und Kalibrationsverfahren ein elektrischer Anschluss erforderlich, da sowohl der Differenzdrucksensor 33 als auch die beiden Temperatursensoren 45 berührungslos mit Energie versorgt und deren Messsignale ausgelesen werden.

Der beschriebene Differenzdruckmessaufnehmer wird analog zu dem Druckmessaufnehmer 1 von Fig. 1 in einem Messgerät eingesetzt, dass eine mit einer RFID Schnittstelle 29 ausgestattete Messgerätelektronik 27 aufweist, über die die Messgerätelektronik 27 die Sensoren, d.h. die Temperatursensoren 45 und vorzugsweise den Differenzdrucksensor 33 mit Energie versorgt, über die die Messgerätelektronik 27 die Messsignale der jeweiligen Sensoren 45, 33 empfängt, und über die die Messgerätelektronik 27 Zugriff auf in dem Speicher 23 bzw. 47 des Messaufnehmers abgelegten Daten hat.

Zu diesen Daten zählen insb. in dem Speicher 23 bzw. 47 abgelegte mit den Temperatursensoren 45 und dem Differenzdrucksensor 33 aufgenommene Daten, die das Übertragungsverhalten der Druckmittler 39 und dessen Temperaturabhängigkeit wiedergeben. Die Messgerätelektronik 27 weist eine Signalverarbeitung 51 auf, die anhand eines Differenzdruckmesssignals des Differenzdrucksensors 33, der Messsignale der Temperatursensoren 45 und der in dem Speicher 23 bzw. 47 des Messaufnehmers abgelegten Daten ein bezüglich der in den Druckmittlern 39 herrschenden Temperaturen kompensiertes Differenzdruckmesssignal erzeugt. Die oben bereits genannten Vorteile derartiger Messgeräte gelten hier natürlich entsprechend.

Vorzugsweise umfasst das Messgerät eine Überwachungseinheit 53, die die Messsignale der Temperatursensoren 45 überwacht und bei einem Ausfall eines Messsignals eines der Temperatursensoren 45 eine Fehlermeldung und/oder einen Alarm auslöst. Hierdurch werden beispielsweise Beschädigungen des Druckmittlers 39 erkannt, die zu einem Ausfall des Temperatursensors 45 führen.

| | |
|---|---|
| 1 | Messaufnehmer |
| 3 | Sensor |
| 5 | Messmembran |
| 7 | Messaufnehmergehäuse |
| 9 | Sensorelektronik |
| 11 | Signalaufbereitungsschaltung |
| 13 | RFID Transponder |
| 15 | Antenne |
| 17 | analoger Schaltkreis |
| 19 | digitaler Schaltkreis |
| 21 | permanenter Speicher |
| 23 | Speicher |
| 25 | Lese- und Schreibvorrichtung |
| 27 | Messgerätelektronik |
| 29 | RFID Schnittstelle |
| 31 | Speicher der Messgerätelektronik |
| 33 | Differenzdruckmesszelle |
| 35 | Temperaturfühler |
| 37 | Temperatursensor |
| 39 | Druckmittler |
| 41 | Trennmembran |
| 43 | Kapillarleitung |
| 45 | Temperatursensor |
| 47 | Speicher des Messaufnehmers |
| 49 | RFID Schnittstelle |
| 51 | Signalverarbeitung |
| 53 | Überwachungseinheit |

## Patentansprüche

1. Verfahren zur Herstellung von Messaufnehmern, insb. von Druckoder Differenzdruckmessaufnehmern, mit
- einem über eine zugeordnete RFID Schnittstelle (49) lesbaren und beschreibbaren Speicher (23, 47),
- mindestens einem Sensor (3, 33, 37, 45) zur Erfassung einer physikalischen Messgröße und zur Umwandlung derselben in eine elektrische Größe,
-- der mit einer Sensorelektronik (9) ausgestattet ist,
--- die dazu dient die elektrische Größe in ein von der Messgröße abhängiges elektrisches Messsignal umzuwandeln, und
--- die mit einem RFID Transponder (13) ausgestattet ist,
---- über den die Energieversorgung des Sensors (3, 33, 37, 45) erfolgt, und
---- über den die Messsignale drahtlos auslesbar sind, bei dem
- die Messaufnehmer und/oder deren Sensoren (3, 33, 37, 45) mindestens einem Kalibrations- und/oder Testverfahren unterzogen werden, bei dem
-- die Sensoren (3, 33, 37, 45) ausschließlich über deren RFID Transponder (13) mit Energie versorgt werden, und deren Messsignale über deren RFID Transponder (13) ausgelesen werden, und
-- anhand der Kalibrations- und/oder Testverfahren messaufnehmer-spezifische und/oder sensor-spezifische Daten abgeleitet und über die RIFD Schnittstelle (49) in dem Speicher (23, 47) abgelegt werden.

2. Verfahren nach Anspruch 1, bei dem ein Kalibrationsverfahren ausgeführt wird, in dem ein Übertragungsverhalten der Sensoren (3, 33) und/oder der Messaufnehmer in Abhängigkeit von der physikalischen Messgröße und/oder eine Temperaturabhängigkeit dieser Übertragungsverhalten ermittelt wird, diese Übertragungsverhalten wiedergebende Daten, insb. Kenngrößen oder Kennlinien abgeleitet werden, und in dem Speicher (23, 47) abgelegt werden.

3. Verfahren nach Anspruch 1, bei dem
- der Messaufnehmer ein Druck- oder Differenzdruckmessaufnehmer ist,
der mindestens einen Druckmittler (39) aufweist,
- mindestens ein Sensor (45) ein in dem Druckmittler (39) angeordneter Temperatursensor ist, und
- ein Kalibrationsverfahren ausgeführt wird, bei dem
-- ein Übertragungsverhalten der Druckmittler (39) in Abhängigkeit von einem darauf einwirkenden Druck (p1, p2) und der mit den Temperatursensoren (45) erfassten Temperatur ermittelt wird,
-- Daten, insb. Kenngrößen oder Kennlinien, abgeleitet werden, die dieses Übertragungsverhalten wiedergeben, und
-- diese Daten über die dem Speicher (23, 47) zugeordnete RFID Schnittstelle (49) in dem Speicher (23, 47) abgelegt werden.

4. Verfahren nach Anspruch 1, bei dem
- eine Transponderkennung jedes Sensors (3, 33, 37, 45) ausgelesen und einer Seriennummer zugeordnet wird, und
- der Messaufnehmer und/oder der jeweilige Sensor (3, 33, 37, 45) während des gesamten daran anschließenden Herstellungsverfahrens anhand der Transponderkennung und/oder der zugeordneten hierzu über die RIFD Schnittstelle (49) in dem Speicher (23, 47) abgelegten Seriennummer berührungslos identifiziert werden

5. Verfahren nach einem der vorangehenden Ansprüche, bei dem in dem Speicher (23, 47) bei der Herstellung erfasste Fertigungsdaten, insb. ein Herstellungsdatum, eine Chargennummer, für die Qualität des Herstellungsprozesses relevante Daten und/oder eine Seriennummer über die dem Speicher (23, 47) zugeordnete RIFD Schnittstelle (49) in dem Speicher (23, 47) abgelegt werden.

6. Verfahren nach Anspruch 1, bei dem
- der Messaufnehmer in einer Fertigungslinie nacheinander mehrere Fertigungsstationen (A, B, C, D) durchläuft in denen jeweils ein Teilherstellungsprozess ausgeführt wird,
- der Messaufnehmer in den Fertigungsstationen (A, B, C, D) über die Transponderkennungen der Sensoren (3) und/oder über in dem Speicher (23) abgelegte Daten identifiziert wird, die in der jeweiligen Fertigungsstation (A, B, C, D) über die dem Speicher (23) zugeordnete RFID Schnittstelle ausgelesen werden, und/oder
- fertigungsrelevante Daten von einer Fertigungsstation (A, B oder C) zu einer nachfolgenden Fertigungsstation (B, C oder D) übermittelt werden, indem sie in der einen Fertigungsstation (A, B oder C) über eine Lese- und Schreibvorrichtung (25) dieser Fertigungsstation (A, B oder C) und die dem Speicher (23) zugeordnete RFID Schnittstelle in dem Speicher (23) abgelegt und in der nachfolgenden Fertigungsstation (B, C oder D) über eine Lese- und Schreibvorrichtung (25) dieser Fertigungsstation (B, C oder D) und die dem Speicher (23) zugeordnete RFID Schnittstelle aus dem Speicher (23) ausgelesen werden.

## Claims

1. Procedure to manufacture transmitters, particularly pressure transmitters or differential pressure transmitters, with:
- a memory (23, 47) that can be read and written to via an assigned RFID interface (49),
- at least one sensor (3, 33, 37, 45) designed to measure a physical variable and to convert said variable to an electrical variable,
-- said sensor being fitted with sensor electronics (9),
--- said sensor electronics being used to convert the electrical variable to an electrical measuring signal that depends on the measured variable, and
--- being fitted with an RFID transponder (13)
---- via which power is supplied to the sensor (3, 33, 37, 45), and
---- via which it is possible to read out the measuring signals by wireless means, wherein
- the transmitters and/or their sensors (3, 33, 37, 45) undergo at least one calibration and/or test procedure, wherein
-- the sensors (3, 33, 37, 45) are powered solely via the associated RFID transponders (13), and wherein the measuring signals of the sensors are read out via the RFID transponders (13), and
-- transmitter-specific and/or sensor-specific data are derived on the basis of the calibration and/or test procedure and stored in the memory (23, 47) via the RFID interface (49).

2. Procedure as claimed in Claim 1, wherein a calibration procedure is performed by determining a transmission behavior of the sensors (3, 33) and/or the transmitters depending on the physical variable and/or determining a temperature dependence of this transmission behavior, deriving data - particularly characteristic parameters or characteristic curves - that reflect this transmission behavior, and saving these data in the memory (23, 47).

3. Procedure as claimed in Claim 1, wherein
- the transmitter is a pressure transmitter or a differential pressure transmitter that has at least one diaphragm seal (39),
- at least one sensor (45) is a temperature sensor that is arranged in the diaphragm seal (39), and
- a calibration procedure is performed wherein
-- a transmission behavior of the diaphragm seal (39) is determined depending on a pressure (p1, p2) acting on the diaphragm seal and the temperature measured with the temperature sensors (45),
-- data, particularly characteristic parameters or characteristic curves, are derived, said data reflecting this transmission behavior, and
-- these data are saved in the memory (23, 47) via the RFID interface (49) assigned to the memory (23, 47).

4. Procedure as claimed in Claim 1, wherein
- a transponder ID of each sensor (3, 33, 37, 45) is read out and assigned to a serial number, and
- the transmitter and/or the respective sensor (3, 33, 37, 45) are identified in a noncontact manner during the entire subsequent manufacturing process using the transponder ID and/or the assigned serial number which is saved in the memory (23, 47) for this purpose via the RFID interface (49).

5. Procedure as claimed in one of the previous claims, wherein manufacturing data recorded during the manufacturing process, particularly a date of manufacture, a batch number, data that are relevant for the quality of the manufacturing process and/or a serial number, are saved in the memory (23, 47) via the RFID interface (49) assigned to the memory (23, 47).

6. Procedure as claimed in Claim 1, wherein
- in a production line the transmitter passes through several production stations (A, B, C, D) in succession and one part of the manufacturing process is performed in each of these stations,
- the transmitter is identified in the production stations (A, B, C, D) via the transponder IDs of the sensors (3) and/or via data saved in the memory (23) which are read out in the individual production station (A, B, C, D) via the RFID interface assigned to the memory (23), and/or
- data from a production station (A, B or C) that are relevant for production are transmitted to a downstream production station (B, C or D) by being saved in the one production station (A, B or C) in the memory (23) via a read and write unit (25) of this production station (A, B or C) and via the RFID interface assigned to the memory (23) and by being read out of this memory (23) in the subsequent production station (B, C or D) via a read and write unit (25) of this production station (B, C or D) and via the RFID interface assigned to the memory (23).

## Revendications

1. Procédé destiné à la fabrication de transmetteurs de mesure, notamment de transmetteurs de pression ou de pression différentielle, avec :
- une mémoire (23, 47) lisible et inscriptible par l'intermédiaire d'une interface RFID (49) correspondante,
- au moins un capteur (3, 33, 37, 45) destiné à l'acquisition d'une grandeur de mesure physique et à la conversion de cette même grandeur en une grandeur électrique,
-- lequel capteur est équipé d'une électronique de capteur (9),
--- laquelle sert à convertir la grandeur électrique en un signal de mesure électrique dépendant de la grandeur de mesure, et
--- laquelle est équipée d'un transpondeur RFID (13)
---- par l'intermédiaire duquel s'effectue l'alimentation électrique du capteur (3, 33, 37, 45), et
---- par l'intermédiaire duquel les signaux de mesure peuvent être lus sans fil, pour lequel
- les transmetteurs de mesure et leurs capteurs (3, 33, 37, 45) sont soumis au moins à une procédure d'étalonnage et/ou de test, pour lequel
-- les capteurs (3, 33, 37, 45) sont alimentés en énergie exclusivement par l'intermédiaire de leur transpondeur RFID (13), et dont les signaux de mesure sont lus par l'intermédiaire de leur transpondeur RFID (13), et pour lequel
-- des données spécifiques aux transmetteurs et aux capteurs sont déduites des procédures d'étalonnage et/ou de test, et enregistrées dans la mémoire (23, 47) par l'intermédiaire de l'interface RFID (49).

2. Procédé selon la revendication 1, pour lequel est exécutée une procédure d'étalonnage, dans laquelle est déterminé un comportement de transmission des capteurs (3, 33) et/ou des transmetteurs de mesure en fonction de la grandeur de mesure physique et/ou une dépendance de température de ces comportements de transmission, les données reflétant les comportements de transmission, notamment les grandeurs ou les lignes caractéristiques, étant déduites et enregistrées dans la mémoire (23, 47).

3. Procédé selon la revendication 1, pour lequel
- le transmetteur de mesure est un transmetteur de pression ou de pression différentielle, lequel comporte au moins un séparateur (39),
- au moins un capteur (45) est un capteur de température disposé dans le séparateur (39), et
- une procédure d'étalonnage est exécutée, pour laquelle
-- un comportement de transmission des séparateurs (39) est déterminé en fonction d'une pression (p1, p2) agissant sur eux et de la température mesurée avec les capteurs de température (45),
-- des données, notamment des grandeurs et des lignes caractéristiques, sont déduites, lesquelles reflètent ce comportement de transmission, et
-- ces données sont enregistrées dans la mémoire (23, 47) par l'intermédiaire de l'interface RFID (49) affectée à la mémoire (23, 47).

4. Procédé selon la revendication 1, pour lequel
- un code de transpondeur de chaque capteur (3, 33, 37, 45) est lu et attribué à un numéro de série, et
- le transmetteur de mesure et/ou le capteur (3, 33, 37, 45) respectif sont identifiés sans contact, pendant l'intégralité du processus de fabrication consécutif, au moyen du code de transpondeur et/ou du numéro de série correspondant, enregistré à cette fin dans la mémoire (23, 47) par l'intermédiaire de l'interface RFID (49).

5. Procédé selon l'une des revendications précédentes, pour lequel sont enregistrées dans la mémoire (23, 47), lors de la création des données de fabrication saisies, notamment une date de fabrication, un numéro de lot, des données importantes pour la qualité du processus de fabrication et/ou un numéro de série par l'intermédiaire de l'interface RFID (49) affectée à la mémoire (23, 47).

6. Procédé selon la revendication 1, pour lequel
- le transmetteur de mesure parcourt, au sein d'une ligne de fabrication, successivement plusieurs stations de fabrication (A, B, C, D), dans lesquelles est exécuté respectivement un sous-processus de fabrication,
- le transmetteur est identifié dans les stations de fabrication (A, B, C, D) au moyen des codes de transpondeur des capteurs (3) et/ou au moyen des données enregistrées dans la mémoire (23), lesquelles sont lues dans la station de fabrication (A, B, C, D) respective par l'intermédiaire de l'interface RFID affectée à la mémoire (23), et/ou
- des données importantes pour la fabrication sont transmises depuis une station de fabrication (A, B ou C) vers une station de fabrication (B, C ou D) suivante, en ce qu'elles sont enregistrées dans la mémoire (23) dans l'une des stations de fabrication (A, B ou C) par l'intermédiaire d'un dispositif de lecture et d'écriture (25) de cette station de fabrication (A, B ou C) et de l'interface RFID affectée à la mémoire (23), et en ce qu'elles sont lues depuis la mémoire de la station de fabrication (B, C ou D) suivante par l'intermédiaire d'un dispositif de lecture et d'écriture (25) de cette station de fabrication (B, C ou D) et de l'interface RFID affectée à la mémoire (23).
